Europäisches Patentamt

**European Patent Office**

**Office européen des brevets**

(19)

(11) Publication number: **0 004 995**
A1

(12) **EUROPEAN PATENT APPLICATION**

(21) Application number: **79200184.4**

(22) Date of filing: **12.04.79**

(51) Int. Cl.²: **H 02 K 37/00**
**H 02 K 41/02**

(30) Priority: **17.04.78 US 896827**

(43) Date of publication of application:
**31.10.79 Bulletin 79/22**

(84) Designated Contracting States:
**DE FR GB**

(71) Applicant: **IMC Magnetics Corporation**
**6058 Walker Avenue**
**Maywood, California 90270(US)**

(72) Inventor: **Coleman, W. Conrad**
**9835 Bogardus Avenue**
**Whittier, California 90603(US)**

(74) Representative: **Coxon, Philip et al,**
**Eric Potter & Clarkson 14 Oxford Street**
**Nottingham NG1 5BP(GB)**

(54) **Linear and rotary device.**

(57) A linear and rotary electromagnetic device particularly adapted as a linear and rotary stepper or stepper motor. A cylindrical movable member or armature (30) is provided which is mounted for both axial movement and for angular movement about its axis. The armature member has teeth (40) on its surface formed in both axial rows and in circumferential alignment or rows. Stator means having poles (60) with windings (62) associated with the poles is provided, the stator means having a central opening in which the movable armature member is mounted for axial and angular movement. By energizing certain angularly spaced windings, the movable armature member may be caused to rotate. By energizing axially spaced windings, the movable member of armature can be caused to move axially. Simultaneous angular and axial movement is achieved by energizing appropriate windings.

FIG. 2

1

# LINEAR AND ROTARY DEVICE

This invention relates to electromagnetically actuated devices, more particularly actuators or motors of this type which are capable of both linear and rotary drive and especially combined linear and rotary steppers or stepper motors.

Rotary stepper motors are widely known and used in various technical fields. The common form of such a stepper motor is one that operates in 200 discrete steps, the motor having a toothed rotor and a stator with poles constructed appropriately for this number of steps. Examples of rotary stepper motors are in U.S. Patents such as Nos 2,931,929; 2,982,872; 3,434,014. Stepper motors that operate in steps are commonly used in connection with digital equipment wherein pulses are applied to the stepper motor which is used as an actuator.

Linear electromagnetic actuators are also known in the art, such devices embodying linearly movable armature members having teeth which are associated with a stator having poles and windings which are energizable to cause the movable member to move in the direction of its length. An example of such a device is illustrated in U.S. Patent No, 3,894,275.

Devices are known in the prior which are combined rotary and linear motors or positioning mechanisms. Illustrative of such devices are the following U.S. Patents: 3,394,295; 3,430,120; 3,441,819;, 3,745,433; 3,851,196 and 3,889,165. The latter patent utilizes a cylindrical movable member which has teeth both on the inside and the outside associated with stators having windings so arranged as to produce both linear and rotary movement.

All of the prior art devices are lacking in specific effectiveness, capabilities, simplicity and compactness of constructional arrangements whereby to realize efficiency and effectiveness of both the linear and rotary movements. It is an object of the present invention to provide an improved linear and rotary device.

According to the present invention we provide a linear and rotary device including in combination, a first member having an axis which is movable and which is mounted to be movable angularly about its axis and to be movable axially, said member having means formed on its surface which provide angularly spaced teeth, said last means being constructed so that axially spaced teeth are provided as well as angularly spaced teeth on the surface of the said member, stator means having poles and including windings and having a circular central opening in which the movable member is disposed so that the teeth of the movable member can move adjacent to the poles of the stator means, the stator means including poles and windings which are spaced axially, the said stator means being constructed such that energizing certain axially spaced stator windings, the movable member can be caused to move axially and whereby the capability is provided that by energizing stator windings that are angularly displaced from each other the said movable member is caused to rotate about its axis.

A preferred form of the invention takes the form of a linear and rotary stepper. An elongated cylindrical movable armature member is provided which is mounted for both axial and angular movement. This member is provided with teeth on its surface, the teeth being arranged in both axial rows and in circumferential aligned rows. Stator means are provided preferably in the form of a plurality of laminated stator members having radial poles with windings associated with individual poles. The construction provides both angularly spaced poles and axially spaced poles, the relationship between the number of stator poles and the number of poles on the movable member being predetermined as described more in detail hereinafter.

The arrangement of the windings associated with the stator means is such that axially spaced windings can be energized to cause the movable member or armature to move axially to a position of minimum reluctance as between its teeth and the stator poles. The arrangement of windings in relation to the teeth on the movable member is further such that angularly spaced windings can be energized in a manner to cause the movable member to rotate about its axis. The device is capable of simultaneous axial and angular movement or so-called "diving" motion.

Reference is now made to the accompanying drawings in which;-

Figure 1 is a cross-sectional view of a preferred form of the invention;

Figure 2 is an isometric view illustrating the stator means and the armature or movable member of the devices of Figure 1;

Figure 3 is a cross-sectional view taken along the line 3⌀3 of Figure 1.

Referring now to the various figures of the drawing numeral 10 designates a cylindrical housing in which the components of the device are contained. As shown, the housing is cylindrical having an integral end part 12 which has an axial bore 14. Fitting in the other end is an end member 16 the diameter of which at the end is bevelled as shown at 17 with the end part of the housing 10 swaged over the bevel as shown at 18. The end number 16 has an axial bore 24.

The housing 10 itself has a bore 26.

Coaxially mounted in the housing 10 is a movable member or armature 39 of magnetic material. The member 30 is mounted in linear bearings 32 and 34 positioned in the bores 14 and 24. Smooth surfaces of the movable member 30 fit inside the bearings so that the movable member 30 is free to move axially as well as angularly.

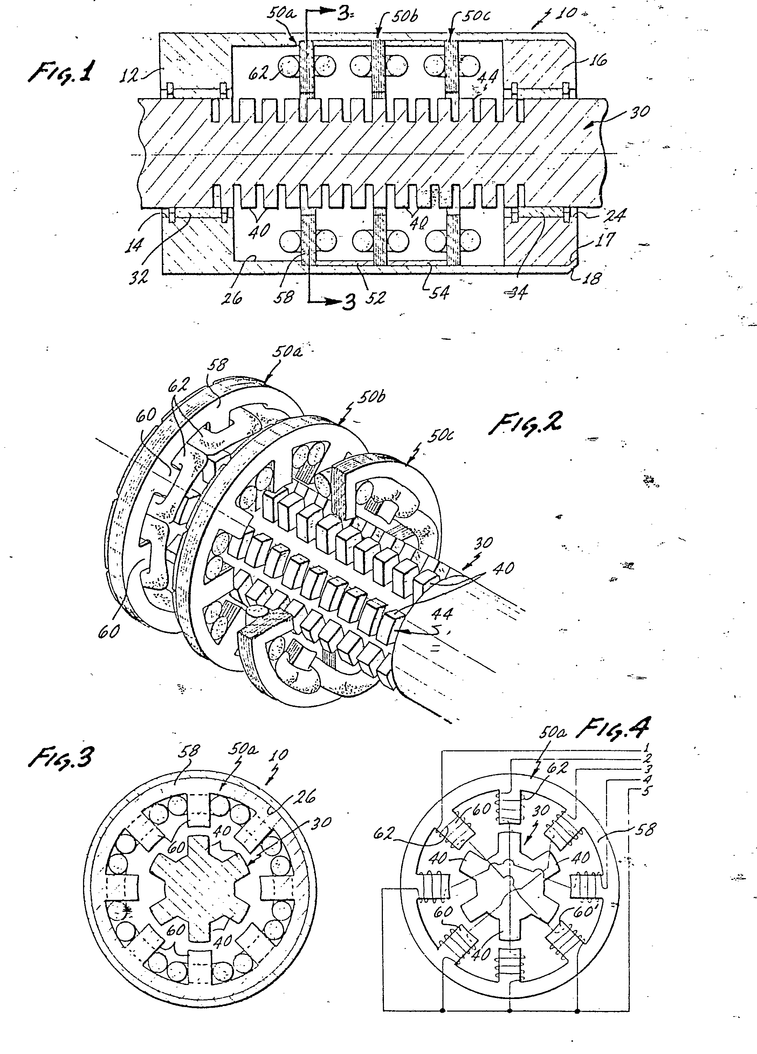

The surface of the member 30 is provided with teeth. The teeth include angularly arranged or aligned teeth such as the teeth as designated at 40 in Figure 3. Six angularly spaced teeth are shown although the number could be different in accordance with teachings of the prior art in connection with known types of stepper motors.

There are a plurality of rows of circumferentially arranged angularly spaced teeth as may be seen in Figures 1 and 2. The circumferential rows are equally spaced axially so as to provide axial rows of teeth as well, one of such rows being designated by the numeral 44 in Figure 2.

A stator assembly with windings is provided as shown in the figures. In the exemplary form of the invention, the stator assembly includes a plurality of laminated stator cores as designated at 50a, 50b and 50c. Each of the stator core units is made up of magnetic laminated material. The stator cores are spaced axially as may be seen in Figure 1 with cylindrical spacer members in between them as designated at 52 and 54 in Figure 1.

The configuration of the stator unit 50a is shown more in detail in Figure 3. It has a ring shaped part as designated at 58 with 8 radially positioned poles one of which is designated at 60 in Figure 3. Wound around each of the poles is a stator winding, one of which is designated at 62 in the figures. While the exemplary embodiment is disclosed as having a predetermined number of stator poles and a predetermined number of angularly spaced teeth on the movable member or armature, it should be understood that different numbers and relationships between numbers of stator poles and teeth on the movable member may be provided. To the extent that the movable member can move angularly, it of course can be called a rotor. The relative number of stator poles and rotor teeth for purposes of angular movement can be provided following teachings of the prior art. Similarly, the axial spacing between teeth or that is rows of teeth in the circumferential direction may be varied considerably. The inner ends of the poles of the stator form an opening in which the movable member or armature is angularly and axially movable as illustrated in the drawings. The peripheral surfaces of the teeth on the movable member 30 move adjacent to the inner ends of the poles of the stator members.

As previously explained, the movable member is mounted in linear bearings to adapt it for both axial and angular movement.

With respect to operation, reference will first be made to linear movements. As may be seen in Figure 1 an angular row of teeth on the member 30 aligns with the ends of poles of the stator member which is the stator member 50b at only one position, the angular rows of teeth at all other positions being misaligned with reference to the inner ends of the end poles of the stator members. The displacement of misaligned teeth is in the amount of one stepping movement. Windings opposite to each other are in series in a separate circuit constituting a phase. The principle of operation is that the movable member and the poles of the stators. Thus as may be seen if some or all of the windings associated with the stator core 50a are energized, the member 30 will move to the left to a position of minimum reluctance wherein a ring of angularly spaced teeth on the member 30 will align with the inner ends of the stator poles of the stator 50a. In a similar manner, member 30 can be caused to translate linearly in the other direction, that is to the right. As may be seen, the device is adapted to movement in increments, that is as a stepper, in response to the application of electrical pulses to particular stator windings. Thus the device is adapted in digital systems both from the standpoint of receiving digital inputs and producing digital outputs. In practice, the windings would be controlled by a computer which would select the windings to be energized in order to realize the desired movements including combined angular and linear movement.

With reference to angular movements of the movable member 30, reference should be had to Figures 2 and 3. The device also operates angularly on the principle of minimum reluctance. In the position of the device as shown in Figure 3, it will be observed that axial rows of teeth on opposite sides of the member 30 are aligned with stator poles. For producing angular movement stator windings associated with stator poles on opposite sides of the rotor 30 are energized. For example in Figure 3 the windings associated with the poles 60 and 60' could be energized causing the rotor 30 to rotate in a clockwise direction to bring teeth on the member 30 into alignment with the poles 60 and 60'. The movement is a stepping movement. Windings might be energized in this manner of only one of the stator assemblies 50 although corresponding windings of more than one of the stator assemblies might be energized at the same time to produce the angular stepping movement. The member 30 moves to the minimim reluctance position.

The angular movement and axial movement of the member 30 can be produced simultaneously, this type of movement being known as "diving" action.

Various types of driving circuits may be utilized including circuitry already known in the art. Circuitry for producing only angular movements provides pulses to predetermined stator windings as described in the foregoing, the application of pulses typically being such as to produce angular stepping movements. Axial movement can be produced by driving circuits of types arranged to apply pulses or otherwise to axially spaced windings as referred to in the foregoing.

For purposes of producing combined axial and angular movement, by way of example, diametrically opposed windings associated with stator 50a might be energized to cause the member 30 to assume a position of mimimum reluctance in both the axial and angular directions. Thus the member 30 will align with energized poles, moving angularly and also moving axially to the position of minimum reluctance. Axial movements in the opposite direction could be obtained by energizing windings of that stator 50c. It will be understood of course that there might be any number of stator units with associated windings. Angular movements are realized by energizing selected windings of one or more selected stator units. Axial movements are realized by energizing windings of the appropriate stator unit and combined axial and angular movements are realized by selection of windings as described for producing both the angular movement and the axial movement.

In the manner described a computer can select terminals of the fifteen exemplary terminals as referred to in connection with Figure 4 so that the movable member can be positioned to a desired predetermined position by way of axial movements, angular movements, or combined movements.

A significant future of the invention is that limit or end switches are not required with the movable member 30. Illustratively, for example, when the member 30 has moved into a position wherein it presents a smooth surface to the end of the poles of stator unit 50a, that stator unit could not cause it to move further. This characteristic also makes it possible to find or locate the position of the movable member 30 when control is in response to a computer in the event and the computer should lose its memory. The position of the movable member 30 is locatable in the manner described for example, that is by inserting pulses until it is in a position where it is no longer movable in response to stator 50a. In the schematic illustration shown two more steps would be possible by control of stators 50b and 50c.

From the foregoing, those skilled in the art will understand the nature and construction of the invention and the manner in which it achieves and realizes the objectives set forth in the foregoing. Synergism is present in the combination in that movements of the movable member can be realized which cannot otherwise be realized by individual parts of the combination. Combined linear and rotary movements are different than either linear or rotary movements per se, and provide a function which can readily be made responsive to computer control not otherwise available.

The foregoing disclosure is representative of a preferred embodiment, it being realized that many equivalent variations are possible, particularly as respects the numbers of teeth angularily and axially, the relative numbers of poles on the stators, the relative positioning of the stators, etc.

CLAIMS:-

1.    A linear and rotary device including in combination a first member having an axis which is movable and which is mounted to be movable angularly about its axis and to be movable axially, said member having means formed on its surface which provide angularly spaced teeth, said last means being constructed so that axially spaced teeth are provided as well as angularly spaced teeth on the surface of the said member, stator means having poles and including windings and having a circular central opening in which the movable member is disposed so that the teeth of the movable member can move adjacent to the poles of the stator means, the stator means including poles and windings which are spaced axially, the said stator means being constructed such that energizing certain axially spaced stator windings, the movable member can be caused to move axially and whereby the capability is provided that by energizing stator windings that are angularly displaced from each other the said movable member is caused to rotate about its axis.

2.    A device according to Claim 1 wherein the capability of simultaneously imparting axial and angular movement to the movable member is provided by energizing certain windings that are axially spaced from each other and by energizing certain windings that are angularly spaced from each other.

3.    A device according to Claim 1 or 2 wherein the said teeth on the movable member are arranged in rows which include axial rows and also circumferential rows in which the teeth are angularly spaced.

4.    A device according to any of claims 1 to 3 wherein the stator means includes axially spaced stator poles, the poles having windings associated therewith.

5.    A device according to any of claims 1 to 4 wherein the number of angularly spaced stator poles bears a predetermined relationship of the number of angularly spaced teeth on the movable member at any given position thereon.

0004995

FIG.1

FIG.2

FIG.3

FIG.4

| Category | DOCUMENTS CONSIDERED TO BE RELEVANT | | CLASSIFICATION OF THE APPLICATION (Int. Cl.²) |
|---|---|---|---|
| | Citation of document with indication, where appropriate, of relevant passages | Relevant to claim | |
| | FR - A - 2 198 299 (DENIS) <br> * Page 5, lines 3-17; page 6, lines 14-27; figure 9 * | 1-5 | H 02 K 37/00 <br> 41/02 |
| | US - A - 3 869 625 (SAWYER) <br> * Column 5, lines 45-50; column 5, line 60 - column 6, line 11; figures 11-14 * | 1-2 | |
| D | US - A - 3 851 196 (HINDS) <br> * Column 3, line 65 - column 4, line 25 * | 1,3 | **TECHNICAL FIELDS SEARCHED (Int.Cl.²)** <br><br> H 02 K 37/00 <br> 41/02 |
| A | US - A - 3 656 014 (RICH) | | |
| A | FR - A - 2 353 163 (KLING) | | |
| A | FR - A - 2 348 595 (ANVAR) | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-07-1979 | RANDES |